(19) Europäisches Patentamt
European Patent Office
Office européen des brevets

(11) **EP 3 888 345 B1**

(12) **EUROPEAN PATENT SPECIFICATION**

(45) Date of publication and mention
of the grant of the patent:
**02.08.2023 Bulletin 2023/31**

(21) Application number: **19702854.1**

(22) Date of filing: **30.01.2019**

(51) International Patent Classification (IPC):
***H04N 1/60*** *(2006.01)*

(52) Cooperative Patent Classification (CPC):
**H04N 1/6063**

(86) International application number:
**PCT/EP2019/052228**

(87) International publication number:
**WO 2020/156653 (06.08.2020 Gazette 2020/32)**

(54) **METHOD FOR GENERATING IMAGE DATA FOR MACHINE LEARNING BASED IMAGING ALGORITHMS**

VERFAHREN ZUR ERZEUGUNG VON BILDDATEN FÜR AUF MASCHINENLERNEN BASIERENDE BILDGEBUNGSALGORITHMEN

PROCÉDÉ DE GÉNÉRATION DE DONNÉES D'IMAGE POUR DES ALGORITHMES D'IMAGERIE BASÉS SUR L'APPRENTISSAGE MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**06.10.2021 Bulletin 2021/40**

(73) Proprietor: **Huawei Technologies Co., Ltd.
Shenzhen Guangdong 518129 (CN)**

(72) Inventor: **KOSKINEN, Samu
16440 Kista (SE)**

(74) Representative: **Isarpatent
Patent- und Rechtsanwälte Barth
Charles Hassa Peckmann & Partner mbB
Friedrichstrasse 31
80801 München (DE)**

(56) References cited:
**US-A1- 2005 168 645      US-A1- 2011 032 380
US-A1- 2018 176 420**

**Description**

<u>TECHNICAL FIELD</u>

The disclosure generally relates to image signal processing, in particular methods and systems for converting arbitrary RGB images to spectral images that can be further processed into raw RGB images for teaching deep learning algorithms. The invention as claimed relates to a method, a computer-based system for processing image data, and a computer-readable medium carrying out such a method.

<u>BACKGROUND</u>

The ultimate goal of a camera chip manufacturer is to manufacture a sensor S that captures an image $I$ of a scene $R$ illuminated by an illuminant $I$ in a way that provides perfect image quality. For a mobile phone camera chip manufacturer, the goal can be defined in a more modest and practical way since there is still a quality gap between the best mobile phone cameras and the high-end DSLR cameras: to provide images of quality matching a high-quality DSLR camera. The goal is not readily achievable by sensor hardware only, but the sensor image (the raw RGB image) must be post-processed by a manufacturer defined Image Signal Processor (ISP) pipeline that consists of various algorithms such as noise reduction, lens shading correction, white balance (color constancy) correction and Bayer demosaicking. Since the introduction of deep learning it has become relevant to study whether all these algorithms can be replaced by end-to-end learnable deep image-to-image transfer architectures.

For training the deep architectures a large set of image pairs is needed, wherein each pair consists of a raw RGB image captured by a camera sensor S and a high quality (ideal) image captured by a high-end sensor that represents the ground truth $S^{GT}$.

The challenge of this approach is the need of the large dataset that is laborious to collect, and the present errors in aligning the images captured by the camera sensor $S$ and the high-end sensor that represents the ground truth $S^{GT}$. For example, in the case of Auto White Balance (AWB) correction it might be possible but extremely time consuming to generate the training image pairs, as it would necessitate physically locating white color reference object in each scene to be captured. In other cases, such as Color Shading Correction (CSC), it would not even be possible to generate the training image pairs manually.

In the past data augmentations have been used in many deep learning based computer vision applications. These applications include image transformations, style transfers and generative adversarial networks. However, these methods are not generally applicable for learning the ISP related algorithms as those need more precise transformations to be used for learning.

To solve the problem for ISP related algorithms, RGB to spectral image conversion (RGB-to-SPEC) is an essential step for generating raw RGB images as observed by an approximated sensor. However, existing RGB-to-SPEC conversion methods assume that the spectral characterization of a device (display or camera device) is available, thus provide no solution for cases where there is no detailed information about the capturing devices (e.g. the input images are downloaded from the internet).

Other approaches include camera processing models that can be used also for reverse processing web images but they do not consider spectral reflectances, nor completely unknown camera profiles. Such another approach is for example disclosed in US 2018/0176420 A1 which relates to automatic white balance based on surface reflection decomposition and chromatic adaption. Raw RGB data generated e.g. by a camera are stored and a gamma correction is applied. A color correction matrix (CCM) performs 3x3 matrix operations on the RGB value output from a automatic white balance (AWB) module. Colors of two surfaces are projected on a plane V spanned by two vectors v1 and v2 and there is used a bidirectional spectral reflectance distribution function f(theta, lambda) in which theta represents all angle-dependent factors and lambda is the wavelength of light. The plane V varies when v2 and v2 change and by changing v1 and v2 a minimum of the projected area results as the best estimate for the scene illuminant. It is possible to narrow the search range for light sources to a subspace where light sources are more likely to occur, since searching through all possible planes V is very time consuming. A chromatic adaption is performed in the chromaticity coordinate system in the PQ domain because this involves much less complex calculations than in the LMS color space known as the human photoreceptor response color space (where "L" stands for long-wavelength-sensitive, "M" stands for middle-wavelength-sensitive and "S" stands for "short-wavelength-sensitive", cone responses).

<u>SUMMARY</u>

It is an object to provide an improved image signal processing method and system that overcome or at least reduce the problem mentioned above. This object is solved by a method of claim 1 and a computer-based system of claim 14 and a computer readable medium according to claim 15, and further advantageous embodiments and improvements of the invention are listed in the dependent claims.

This object is achieved by the method according to the invention by converting arbitrary images $I_{WEB}$ to spectral ground truth image data $I_{SPEC}$ of the captured scene reflectances $R$ under an arbitrary illumination $I$. The spectral image data $I_{SPEC}$ is then forward converted to raw RGB image data $I_{RAW}$ of a known sensor $S$. The generated images $I_{RAW}$ can then be used to train deep models for ISP algorithms, such as Auto White Balance (AWB) and Color Shading Correction (CSC).

According to the invention, there is provided a method for processing image data, the method comprising the following steps:

storing image data $I_{WEB}$ representative of an image in a memory, wherein the image data $I_{WEB}$ is in RGB format;

receiving the image data $I_{WEB}$ in an image signal processor;

transforming the image data $I_{WEB}$ into linear RGB format by applying inverse gamma correction to the image data $Iw\varepsilon s$;

applying an observer color-mapping function to the image data $Iw\varepsilon s$;

transforming the image data $I_{WEB}$ into a spectral matching color space where luminance components L and chrominance components c are separated;

providing values of a natural spectrum $\lambda$ in the same spectral matching color space;

applying spectral matching to the image data $I_{WEB}$ in the spectral matching color space, wherein the luminance components $L$ are omitted and color differences between the image and the natural spectrum $\lambda$ are measured as the Euclidean distances between their pairs of chrominance components $c$;

improving the spectral matching by modifying the natural spectrum $\lambda$ in a sequence of iterative steps in order to reduce the Euclidean distances and to find a corresponding natural spectrum $\lambda$; and

converting the image data $I_{WEB}$ to spectral image data $I_{SPEC}$ of a spectral image using the corresponding natural spectrum $\lambda$.

With the image data processing method according to the invention it becomes possible to take arbitrary RGB images as input and convert them to raw RGB images with the ultimate goal of data augmentation for deep learning. The proposed method provides full control over the important scene, lens and camera parameters to "hallucinate" raw sensor images of a virtual camera that approximates any known sensor. The fact that the method ultimately enables to also simulate the ground truth images results in the possibility to download a huge number of arbitrary online images e.g. by known image scraping methods and convert them to sensor specific images that can be used to train deep models to replace traditional ISP algorithms. This approach not only saves time e.g. in the case of training machine learning models for AWB correction tasks but enables the training of previously impossible machine learning tasks such as Color Shading Correction.

In a possible implementation form of the first aspect the steps of the method are carried out in the sequence indicated in the description of the first aspect.

According to the inventinon applying the observer color-mapping function to the image data $I_{WEB}$ comprises

converting chromacity coordinates $c_S$ of the image data $I_{WEB}$ from a source tristimulus color space into chromacity coordinates $c_t$ in a target tristimulus color space, wherein the conversion is done using at least one of

a conversion look-up table *LUT,* or

a conversion matrix *M,* wherein the size of the conversion matrix *M* is at least 3x3.

Further according to the invention, the conversion of the chromacity coordinates is done using a conversion matrix *M* according to the formula:

$$c_t = M c_s$$

and wherein the method further comprises optimizing the conversion matrix $M$ using a gradient descent algorithm in an iteration loop according to the formula:

$$\underset{M}{argmin} \sum_i \|c_{CIE} - Mc_{sRGB}\|$$

where $i$ refers to the number of colors used for the color-mapping function, $c_{CIE}$ represents the target chromacity coordinates in a standard color space, and $c_{sRGB}$ represents the source chromacity coordinates in the RGB color space;

wherein each non-diagonal coefficient is optimized one by one,

diagonal values are calculated right after each non-diagonal coefficient change to keep the sum of each row at 1, and

after calculating all the coefficients, the optimization step is applied again until no improvement can be noticed.

In a possible embodiment of the invention applying the observer color-mapping function to the image data $I_{WEB}$ comprises

fixing the target color space to the CIE 1931 Standard Observer color space, and

defining a fixed number $N_c$ of colors with known reflection spectra and calibration charts that cover the standard RGB color gamut to be used for the color-mapping function,

wherein the fixed number $N_c$ equals or is larger than 24.

In a possible further embodiment of the invention applying the observer color-mapping function to the image data $I_{WEB}$ further comprises

selecting a number $N_L$ of illuminants $I$ for which their spectra are available and whose distribution approximates normal statistical distribution of typical illuminant $I$ use cases;

selecting one of the number $N_L$ of illuminants $I$ each time as selected illuminant $m$ during the sequence of iterative steps;

wherein the selection is carried as at least one of a random selection, or a selection based on information associated with the image such as metadata or image data $Iw_{ES}$; and

wherein the number $N_L$ ranges from 10 to 1000, more preferably from 50 to 500, more preferably equals 100.

In a possible further embodiment of the invention, the method further comprises

after applying the observer color-mapping function to the image data $I_{WEB}$, applying inverse Auto White Balance correction to the image data $I_{WEB}$, wherein
the inverse Auto White Balance correction is preferably applied before the spectral matching.

In a possible further embodiment of the invention, the spectral matching color space is the CIELAB color space with values defined as $(L)a_1b_1$, where $L$ refers to the luminance components and $a_1b_1$ $a$ refer to the chrominance components as three numerical values.

In a possible further embodiment of the invention, applying spectral matching to the image data $I_{WEB}$ comprises interpolating between color values, wherein

each pixel color is reconstructed from a set of natural spectral responses, and wherein

interpolation weights are applied in the spectral domain to reconstruct the spectrum of the color of each pixel in the image according to the formula:

$$I_i(x, y) = \sum w_l i_{db,l} \ , i \in \{a, b\}$$

wherein $I(x,y)$ represents original image in the spectral domain, $I$ represents the illuminant, $w_l$ represents the interpolation weights, and db represent the database of natural spectra under typical illuminations $\{R_{db}, G_{db}, B_{db}\}$.

In a possible further embodiment of the invention, improving the spectral matching comprises

applying an iterative function that alters the interpolation spectra modulated by CIE Standard Observer curves:

$$I(\lambda) = I(\lambda) + \sum_i I(\lambda) S_i^{CIE}(\lambda) \left( \frac{c_i^T}{c_i^S} - 1 \right), \qquad i \in \{R, G, B\}$$

wherein $I(A)$ is a spectrum of the image to be optimized, where $\lambda$ represents the CIE Standard Observer curves, $S_i^{CIE}$ represents the normalized weights based on the CIE Standard Observer curves, and $c^T$ and $c^S$ represent target RBG values and source RBG values respectively; and

calculating the error between the target RBG values $c^T$ and source RBG values $c^S$, wherein the iterative function is iteratively optimized until the error is:

$$\left| c_i^T - c_i^S \right| < 0.00001$$

In a possible further embodiment of the invention, the method further comprises
after converting the image data $I_{WEB}$ to spectral image data $I_{SPEC}$, matching the brightness level of the image for each pixel by applying multiplication of luminance values in the spectral domain.
In a possible further embodiment of the invention, the method further comprises

converting the spectral image data $I_{SPEC}$ to raw RGB image data $I_{RAW}$ using camera characterization information regarding spatial spectral response of a camera sensor $S$,
wherein spectral image data $I_{SPEC}$ associated with one spectral image is used to generate raw RGB image data $I_{RAW}$ for multiple raw RGB images.

In a possible further embodiment of the invention, the camera characterization information is gained from spatial spectral measurement of a camera sensor.
In a possible further embodiment of the invention, converting the spectral image data $I_{SPEC}$ to raw RGB image data $I_{RAW}$ comprises
calculating the RGB color response of each pixel of the spectral image using the information regarding spatial spectral response of the camera sensor Sand a spectrum A of an illuminant/selected when applying the observer color-mapping function to the image data $I_{WEB}$.
In a further embodiment of the invention, of the first aspect converting the spectral image data $I_{SPEC}$ to raw RGB image data $I_{RAW}$ further comprises

calculating Auto White Balance correction gains by multiplying the camera response at the center of the spectral image together with the illuminant $I$ and summarizing the results for the R, G and B channels separately,

calculating color shading and vignetting parameters by multiplying the spatial camera response together with the illuminant $I$ and summarizing the results the R, G and B channels separately, then applying the Auto White Balance gains and normalizing the responses at the image center;

optionally applying vignetting correction by applying the inverse of the vignetting parameters; and

applying Auto White Balance correction and color shading correction based on the calculated parameters.

In a possible further embodiment of the invention, the method further comprises

using the raw RGB image data $I_{RAW}$ for the training of a deep learning model $DL$,

wherein the deep learning model $DL$ is configured to apply automatic image signal processing function to input image data,

wherein the function is one of Auto White Balance correction or Color Shading Correction.

According to the present invention, there is also provided a computer-based system for processing image data, the system comprising

a memory device configured to store image data $I_{WEB}$ of an image in RGB format;

an image signal processor configured to receive the image data $I_{WEB}$ as an input for an inverse image signal processing pipeline; and

a storage device configured to store instructions that, when executed by the image signal processor, cause the computer-based system to perform a method according to any one of the possible implementation forms of the first aspect.

The solution of the object and other advantages will be apparent from the embodiment(s) described below.

BRIEF DESCRIPTION OF THE DRAWINGS

In the following detailed portion of the present disclosure, the aspects, embodiments and implementations will be explained in more detail with reference to the example embodiments shown in the drawings, in which:

Fig. 1 is a flow diagram of the image signal processing method in accordance with the invention.

Fig. 2 is a flow diagram of applying an observer color-mapping function to the image data in accordance with the invention.

Fig. 3 is a flow diagram of the spectral refinement iteration in accordance with the invention.

Fig. 4 is a flow diagram of converting spectral image data to raw RGB image data in accordance with an embodiment of the invention.

Fig. 5 is a flow diagram of generating raw RGB image data in accordance with another embodiment of the invention.

Fig. 6 is a flow diagram of using raw RGB image data for the training of a deep learning model in accordance with another embodiment of the invention.

Fig. 7 illustrates in a flow diagram the overview of the image signal processing method in accordance with the invention.

Fig. 8 shows a block diagram illustrating an example of a hardware configuration of a computer-based system of the invention.

DETAILED DESCRIPTION

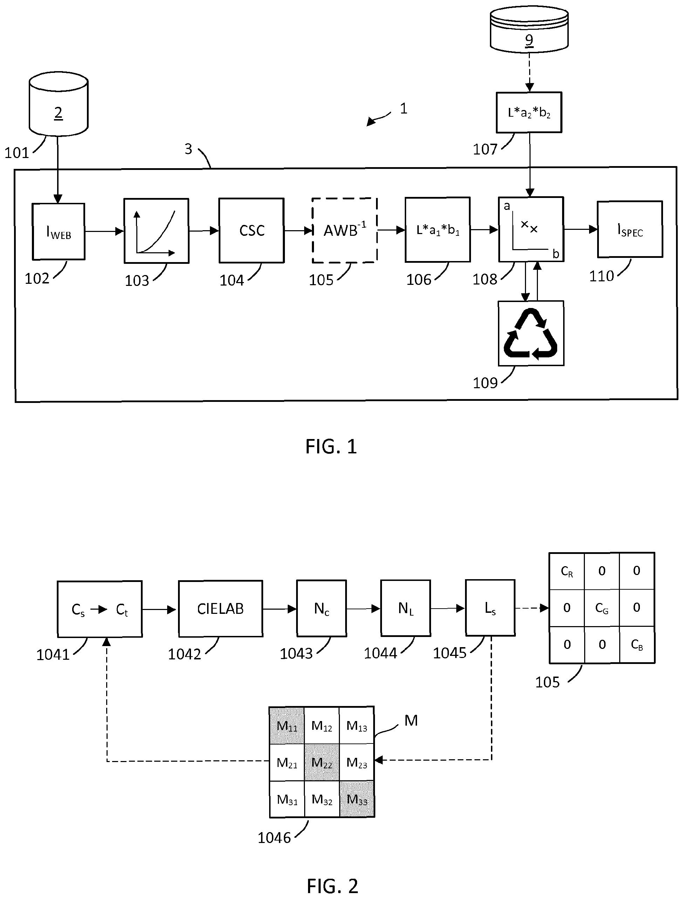

Fig. 1 illustrates in a flow diagram the core steps of the image signal processing method in accordance with the invention.

The main object of the method is to invert the standard Image Signal Processor (ISP) pipeline of a sensor S that produces an image $I$ of scene colors $R$ under the illumination $I$. The problem of image formation under a global illumination can be expressed as the following ISP equation:

$$I_i(x,y) = \int L(\lambda) S_i(x,y,\lambda) R(x,y,\lambda) d\lambda \ , i \in \{R, G, B\}$$

In this equation $I_i(x,y)$ is a spatial image of three color channels Red, Green, Blue (R,G,B) with characteristic sensor curves over the wavelengths $\lambda$, whereby $I_i$ is a "RAW image" that corresponds to sensor readings at each pixel. If the spectral image $R$ is available, then the image $I_i$ can be rendered for arbitrary illumination $L$ and sensor $S$.

In a first step 101, images are stored as image data $I_{WEB}$ in a memory 2. In an embodiment the images are downloaded from online image sources and stored in a storage device 4 before being loaded for temporary storage into the memory 2. In an embodiment the images are downloaded using a scraping method. The images found online typically use the RGB or standard (sRGB) color space where the colors are independent of the capturing device. In order to convert these images to more useful observer RGB space we need to perform two steps: RGB linearization and color space conversion.

For this purpose, in a next step 102 the image data $I_{WEB}$ is transferred and received in an image signal processor 3.

In a next step 103 the image data $I_{WEB}$ is transformed into linear RGB format. During this step of RGB linearization inverse gamma correction is applied to the image data. This is necessary because the sRGB color space for images used for display purposes are inherently Gamma corrected. However, for processing purposes it is better to use a linear RGB color space (lin-RGB) where the color values correspond to the radiation. For this purpose, we use the following inverse Gamma correction formula:

$$C = \begin{cases} \dfrac{C'}{12.92} & C' \leq 0.04045 \\ \left(\dfrac{C' + 0.055}{1 + 0.055}\right)^{2.4} & , \quad C' > 0.04045 \end{cases}$$

wherein $C'$ represent R, G, and B values in sRGB and C expresses the corresponding linear values in lin-RGB.

In a next color space conversion step 104 an observer color-mapping function is applied to the image data $I_{WEB}$ whereby the chromacity coordinates $c_t$ in a target tristimulus color space are calculated from chromacity coordinates $c_s$ of a source tristimulus color space (e.g. lin-RGB). In an embodiment the color space is fixed to a standard observer color space. In other possible embodiments other observers can be used, e.g. camera sensor characteristics.

In an embodiment, in a next step 105 inverse Auto White Balance (AWB) correction is applied to the image data $I_{WEB}$. This step, although not compulsory, needs to be considered before the spectral matching as all the information need to be in a common color space. In another embodiment, the white balance is corrected later, e.g. during the spectral database calculations. Inverting it at this point results in eliminating the need to do it during the iteration steps. The inversion is done using the ISP equation with the known illuminant $I$ and observer $S$. The colors of the scene $R$ can be assumed to be perfectly flat, i.e. gray, and can be left out of the ISP equation. Therefore, the color channel response differences can be calculated and normalized. The normalization gains are the same as AWB gains that can be inverted at this stage.

In a next step 106 the image data is transformed into a spectral matching color space, where luminance components $L$ and chrominance components $c$ are separated and where color differences can be measured using Euclidean distances. In an embodiment, this color space is the CIELAB color space with values defined as $(L)a_1b_1$, where $L$ refers to the luminance components and $a_1,b_1$ refer to the chrominance components as three numerical values. However, in other possible embodiments other color spaces such as YUV, CIELUV, HSV can be used.

After the inverted imaging pipeline the input image is given as $I_{CIE-RGB,m}(x,y)$ in the linear observer color space with a randomly selected illuminant m. All RGB values are then converted to the spectral matching color space using the previously calculated natural spectra color values in the same color space $\{R_{db},G_{db},B_{db}\}_{l,m}$.

In a next step 107, values of a natural spectrum $\lambda$ are provided in the same spectral matching color space as the image data is transformed into. In an embodiment these values are provided from a database 9 of natural spectra. In an embodiment the database 9 provides a dataset that covers the color gamut of natural scenes. In an embodiment, values of the natural spectrum $\lambda$ are provided using the Munsell Glossy database, whereby each spectrum is converted to an observer RGB space with all $m$ illuminants using the ISP equation to represent the database of natural spectra $db$ under typical illuminations $\{R_{db},G_{db},B_{db}\}_{l,m}$. In an embodiment m=100.

In a next spectral matching step 108, the image tristimulus values are matched with tristimulus values of different natural spectra in the tristimulus space. The luminance components $L$ are omitted and color differences between the image and the natural spectrum $\lambda$ are measured as the Euclidean distances between their pairs of chrominance components $c$. In an embodiment, an interpolation is performed for the spectral matching, where each pixel color is reconstructed from a set of natural spectral responses according to the formula:

$$I_i(x, y) = \sum w_l i_{db,l} \quad, i \in \{a, b\}$$

wherein $I(x,y)$ represents original image in the spectral domain, $I$ represents the illuminant, $w_l$ represents the interpolation weights, and db represent the database of natural spectra under typical illuminations $\{R_{db}, G_{db}, B_{db}\}$.

The interpolation weights $w_l$ are used in the spectral domain to reconstruct the spectrum of the color of each pixel in the image. After this stage, we have the original image in the spectral domain $I(x, y; \lambda, L^l)$ where $L^l$ denotes what that spectrum holds for the I-th illuminant in the set of available illuminants.

The quality of the interpolated spectrum depends on the quality of the spectral database and accuracy of the matching technique. It is noteworthy that the Munsell Spectral database is sparse and therefore leads to discretization error.

A next spectral refinement step 109 is therefore introduced in the method for this purpose, which provides more accurate spectrums when compared to RBG values of the input image pixels by modifying the natural spectrum $\lambda$ in a sequence of iterative steps in order to reduce the Euclidean distances and to find a corresponding natural spectrum $\lambda$.

In a next step 110 the image data $I_{WEB}$ is converted to spectral image data $I_{SPEC}$ using the corresponding natural spectrum $\lambda$ that has been determined during the iterative steps of the spectral refinement 109.

The outcome of the inversion of the image signal processing pipeline is $I(\lambda)R(\lambda)$ where the illuminant can be arbitrary selected from a set of standard illuminants with known spectral ($\lambda$) characteristics. From $I(\lambda)R(\lambda)$ $I_{RAW}$ can be generated for any sensor $S(\lambda)$ whose spectral characteristics are known.

Fig. 2 illustrates the steps of applying an observer color-mapping function to the image data $I_{WEB}$. in accordance with the invention.

In a first step 1041, given the chromacity coordinates $c_s$ of a source tristimulus color space (e.g. lin-RGB) the coordinates $c_t$ in a target tristimulus color space can be computed. In an embodiment this conversion is done using a conversion look-up table $LUT$. In another embodiment this conversion is done using a conversion matrix $M$ using the formula:

$$c_t = Mc_s$$

In an embodiment the size of the conversion matrix $M$ is $3 \times 3$. In other possible embodiments the size of the conversion matrix $M$ can be larger, e.g. $4 \times 4$, $5 \times 5$, $6 \times 6$ and so on.

In a next step 1042 the target color space is fixed to an observer color space for which we know the spectral sensitivity curves $S_X^{CIE}(\lambda)$, $S_Y^{CIE}(\lambda)$ and $S_Z^{CIE}(\lambda)$. An ideal ISP pipeline produces a device independent image where colors rendered by an ideal display correspond to the colors observed by humans (on average). In an embodiment, the average human is defined as the CIE 1931 Standard Observer in the standard RGB (sRGB) color space and thus the target color space is fixed to the CIE 1931 Standard Observer.

In a next step 1043, a fixed number $N_c$ of colors is defined that cover the sRGB color gamut and for which their reflection spectra are available. In an embodiment the 24 standard colors according to the well-known ColorChecker Color Rendition Chart are used, where each of the 24 colors represents the actual color of natural objects and reflects light just like its real-world counterpart. For these ColorChecker colors their reflectance spectra $R^{j=1,...24}(\lambda)$ are available. In other possible embodiments other color charts can be used, wherein the fixed number $N_c$ of colors is smaller, equals or is larger than 24.

For a fixed illuminant $L^k(\lambda)$ the formula according to the ISP equation is used to construct the RGB values observed by a standard observer (CIE) for color $j$ illuminated by the fixed illuminant $k$.

While the observer space can be fixed to the CIE 1931 Standard Observer and the colors to the 24 ColorChecker colors the choice of illuminant has important role in data augmentation for imaging, as the imaging algorithms should be robust to all illumination types.

Therefore, in a next step 1044 a number $N_L$ of illuminants $l$ are selected for which natural spectra are available and whose distribution approximates the typical use cases (e.g. Outdoor: daylight; Indoor:

Fluorescent and Tungsten; Flash: LED). In one embodiment the illuminants are selected from standard illuminants. In one embodiment the number $N_L$=100. In further possible embodiments the number $N_L$ ranges from 10 to 1000, more preferably from 50 to 500.

A distribution of standard illuminants according to a possible embodiment is illustrated in Table 1.

Table 1. Database of standard illuminants used in the proposed data augmentation.

| Illuminant $R^k(\lambda)$ Type | # of | Color Temps (K) |
|---|---|---|
| Daylight | 70 | 2500-9400 |
| LED | 13 | 2300-5800 |
| Tungsten | 9 | 2200-3250 |
| Fluorescent | 8 | 2500-4250 |

In a next step 1045 one of the number $N_L$ of illuminants $I$ is selected for each image. In one embodiment the selection is carried as a random selection. In another embodiment the selection based on information associated with the image, such as metadata or image data $I_{WEB}$. It can be noted that this selection does not affect the results, even for illuminants that are far from the one actually present when the image was captured. However, in an embodiment, a conversion matrix $M^k$ is formed for each fixed illuminant $k$.

In a next step 1046 the conversion matrix $M$ is optimized according to the invention by the following optimization:

$$\underset{M}{argmin} \sum_i \|c_{CIE} - Mc_{sRGB}\|$$

where i may refer to the 24 ColorChecker colors. The source and target RGB values $(R_{sRGB},G_{sRGB},B_{sRGB})^T$ and $(R_{CIE},G_{CIE},B_{CIE})^T$ can be computed using the know spectra of illuminants and the sRGB and CIELAB color spaces.

In one embodiment a gradient descent algorithm is used for optimizing the conversion matrix $M$, whereby each non-diagonal coefficient is optimized one by one. After going through all the coefficients, the optimization is started again until no improvement can be noticed anymore. This iteration-based approach is needed as local minima of the coefficients are correlated with each other. *CIE Delta E\** is used as the cost function of the algorithm.

The diagonal values are calculated right after each coefficient change in order to keep the sum of each row at 1 so as not to affect the white balance at this stage.

For the inverted imaging pipeline the RGB or sRGB values are thus replaced by lin-RGB values and $M^{-1}$ can be used to convert the lin-RGB values to the observer color space.

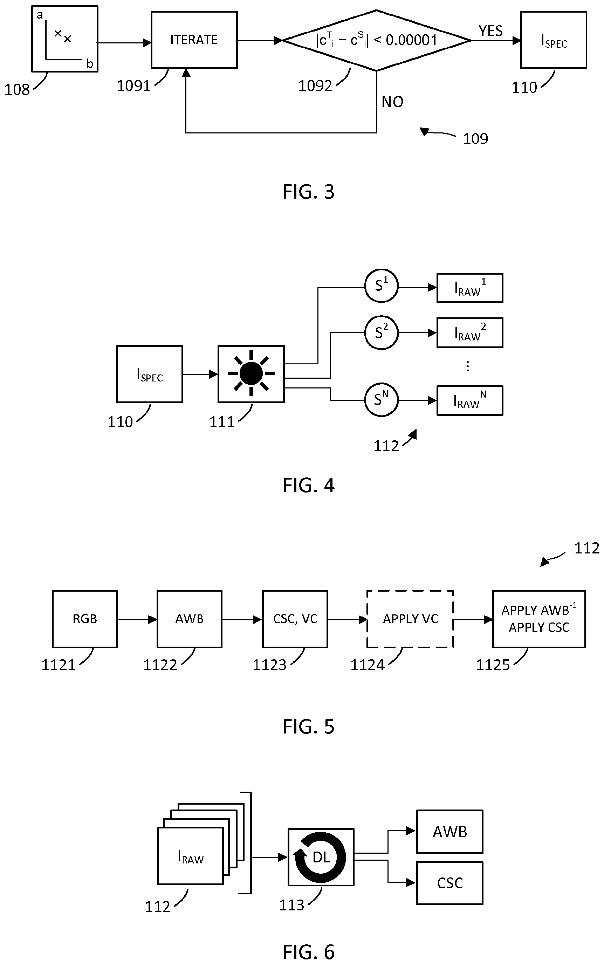

Fig. 3 illustrates the spectral refinement iteration that provides more accurate spectrums when compared to RBG values of the input image pixels according to an embodiment of the invention. For this purpose of spectral refinement different algorithms can be applied but they easily lead to unnaturally peaky spectra that do not occur in nature.

In a next step 1091 an iterative algorithm is applied that minimizes the CIE RGB error by altering the interpolation spectra modulated by the CIE Standard Observer curves as follows:

$$I(\lambda) = I(\lambda) + \sum_i I(\lambda)S_i^{CIE}(\lambda)\left(\frac{c_i^T}{c_i^S} - 1\right), \qquad i \in \{R, G, B\}$$

wherein $I(A)$ is a spectrum of the image to be optimized, where $\lambda$ represents the CIE Standard Observer curves, $S_i^{CIE}$ represents the normalized weights based on the CIE Standard Observer curves, and $c^T$ and $c^S$ represent target RBG values and source RBG values respectively. This step is also justified by the fact that the observer curves represent human color perception which has been evolved to match the natural environment.

In a next step 1092 the iterative function is iteratively optimized until the error is for all R,G,B values fulfills the criteria:

$$\left|c_i^T - c_i^S\right| < 0.00001$$

Fig. 4 illustrates the steps of converting spectral image data $I_{SPEC}$ to raw RGB image data $I_{RAW}$.

In a first step 111, after the image data $I_{WEB}$ is converted to spectral image data $I_{SPEC}$, the image brightness level for each pixel is matched by simple multiplication in the spectral domain.

In a next step 112 the spectral image data $I_{SPEC}$ is converted to raw RGB image data $I_{RAW}$ using camera characterization information regarding spatial spectral response of a camera sensor S. In this step spectral image data $I_{SPEC}$ associated with one spectral image can be used to generate raw RGB image data $I_{RAW}$ for multiple raw RGB images $I_{RAW}^1$ to $I_{RAW}^N$ using camera characterization information of spatial spectral responses of multiple camera

sensors $S^1$ to $S^N$.

In an embodiment the camera characterization information is gained from spatial spectral measurement of a camera sensor. For example, in an embodiment, a Labsphere OES-1000 device can be used to measure the spectral response of a mobile camera (such as the camera of the Huawei P20 smartphone) that supports RAW image output, which is needed in order to get accurate results. The spectral measurement device can measure the spectrum in the range of 380 to 1100nm with 1nm steps. For saving storage space and processing time, in an embodiment a range of 400 to 700nm is used with 5nm steps for all the calculations. In order to reduce the noise in the measurements in an embodiment 50x50 pixel areas for each color channel are averaged when calculating the spatial spectral grid. In an embodiment odd numbers of columns and rows are used to get one point at the image center. In a particularly advantageous embodiment this results in a grid of 59x79 points.

Fig. 5 illustrates the sequence of steps for generating raw RGB image data $I_{RAW}$(112).

In a first step 1121, the response of the camera sensor, the selected illuminant and the image reflectance spectrums are combined together at each spatial location according to the ISP equation to get the R,G,B responses. It is important to use the same illuminant that was used for converting the RBG image $I_{WEB}$ to a spectral image $I_{SPEC}$ to avoid color casts on the images.

In an embodiment the data ranges are defined for this step by setting the highest value to maximum of the data range. However, this can then result in similar exposures in all images which is not that realistic. Therefore, in another preferred embodiment a random multiplier between [0.6, 1.4] is introduced to the images, thereby causing some images to be underexposed and some overexposed with clipped highlights.

In a next step 1122, the ideal AWB correction gains are calculated by multiplying the camera response at the center together with the illuminant $I$ and summarizing the results for R,G,B channels separately. This step gives the relative sensitivity of the color channels under gray color. The AWB gains can be calculated as follows:

$$AWB = \frac{\max(R,G,B)}{[R,G,B]}$$

In a next step 1123, the color shading and vignetting parameters are calculated by multiplying the spatial camera response together with the illuminant and summarizing the results for R,G,B channels separately, then applying the AWB gains and normalizing the responses at the image center. The *min(R,G,B)* values at each pixel location represent the vignetting, whereby color shading is the ratio of the color channel against the minimum response at the pixel location (x,y) according to the formula:

$$C_{x,y} = \frac{C_{x,y}}{\min(R_{x,y}, G_{x,y}, B_{x,y})}$$

where C is the value of either R, G or B.

In a next optional step 1124, the vignetting correction can be applied to the image. The correction is simply the inverse of the calculated vignetting parameters.

In an embodiment, where the reference datasets are captured with DSLRs having very little vignetting the vignetting, correction can be applied right after calculating the RGB color response of each pixel 1121. This way the vignetting correction does not have to be learned for the following steps.

In a next step 1125, the accurate AWB and color shading correction values are applied to the image, thus resulting in getting all the remaining combinations of input and output training pairs.

Fig. 6 illustrates the steps of using raw RGB image data $I_{RAW}$ generated in step 112 described above as input for the training 113 of a deep learning model *DL*. The deep learning model *DL* is configured to apply automatic image signal processing function to input image data. The signal processing function can be either Auto White Balance (AWB) correction or Color Shading Correction (CSC).

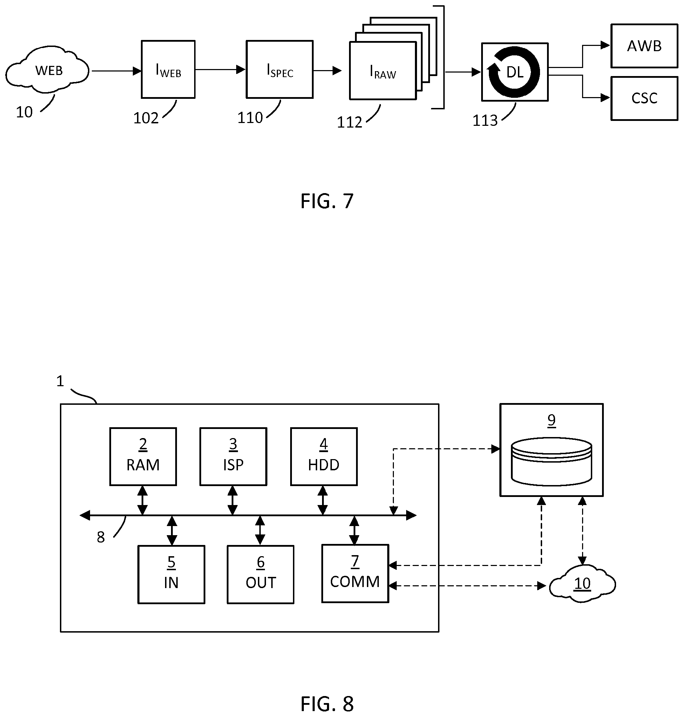

Fig. 7 illustrates an overview of the proposed image signal processing method that takes arbitrary RGB images from a computer network 10 (e.g. images downloaded from online sources) as input image data $I_{WEB}$ 102 and converts them first to spectral image data $I_{SPEC}$ 110 then to raw RGB image data 112. The output image pairs of these steps can then be used in data augmentation for training input data in a deep learning model *DL* 113, which model can be used for automatic processing of tasks such as Auto White Balance correction or Color Shading Correction.

The proposed method provides full control over the important scene, lens and camera parameters to "hallucinate" raw sensor images of a virtual camera that approximates any known sensor. The generated data can be used to train deep models of the standard algorithms needed in modern image signal processors (ISPs) as it enables to simulate ground truth images.

Fig. 8 shows a block diagram illustrating an example of a hardware configuration of a computer-based system 1 in accordance with invention. Steps and features that are the same or similar to corresponding steps and features previously described or shown herein are denoted by the same reference numeral as previously used for simplicity.

The computer-based system 1 may be connected to a database 9 configured for storing data of natural spectra, wherein the type of connection between the two can be direct or indirect, as will be described below.

The computer-based system 1 comprises an Image Signal Processor (ISP) 12 configured for receiving image data $I_{WEB}$ as an input and for performing image data processing based on software-based instructions, a storage medium (HDD) 13 (HDD) for storing data to be processed and software-based instructions to be executed by the ISP 12, and a memory (RAM) configured for (temporarily) storing image data $I_{WEB}$ of an image in RGB format.

The computer-based system 1 may also comprise an input device (IN) 5 for receiving input from a user, an output device (OUT) 6 such as an electronic display for conveying information to a user, and a communication interface (COMM) 7 for communicating with external devices directly, or indirectly via a computer network 10.

The mentioned hardware elements within the computer-based system 1 may be connected via an internal bus 8 configured for handling data communication and processing operations.

In one embodiment the computer-based system 1 and the database 9 are both included in the same physical device, connected via the internal bus 8.

In another embodiment the computer-based system 1 and the database 9 are, or are part of, physically different devices, and are connected via the communication interface (COMM) 7 either directly, or indirectly via a computer network 10.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measured cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems.

The reference signs used in the claims shall not be construed as limiting the scope. The scope of protection is to be interpreted in accordance with Art. 69 of the EPC protocol.

VALIDATION TEST RESULTS

To validate the proposed inverted imaging pipeline method we conducted a validation check with 1,000 randomly selected OpenImages images that were first transformed to the spectral domain using the method and then transformed back using the forward pipeline. After the backward-forward process we computed the mean, median, maximum and 99% percentile errors between the original and backward-forward processed pixels in all the images. The numbers were 0.0016, 0.0003, 1.7795 and 0.0198 reported as the color chromacity error, respectively.

In the color theory literature an error smaller than 1.0 is considered negligible. Thus, the errors are so small that they are not noticeable by a human. However, we also recognize that some of the optimized spectrums could be more natural in shape. The unnaturalness happened when there were zero values in the original input pixels. The spectral optimization routine in that case forced some of the related wavelengths to an absolute zero causing less natural spectral shapes. This can be improved by adding even a very small offset to the input image data but that in effect causes the error numbers to increase. In practice it is possible to tune the offset value between naturalness and numerical accuracy depending on the use case. An empirically estimated good range for the offset is $[0, 10^{-4}]$. We used $10^{-6}$ in all of the presented calculations. The two datasets used for the color constancy experiments are Shi-Gehler (568 images, 2 cameras) and NUS (1,853 images, 9 cameras) for which we conducted cross-dataset evaluation that tests, as well as generalization of the methods which is a very important consideration with deep learning methods. Training data is generated using the proposed method and by selecting images randomly from the recently published Google OpenImages dataset.

Table 2. Cross-dataset color constancy performance for the NUS dataset. The last column is the proportion of test images for which a sufficient accuracy (angular error $\leq 3.0°$) was achieved.

| Method | Tr. Data | Error | | |
|---|---|---|---|---|
| | | Mean | Median | % $\leq$ 3.0° |
| CNN-CC | Shi-Gehler | 4.03 | 3.66 | 35.5 |

(continued)

| Method | Tr. Data | Error | | |
| --- | --- | --- | --- | --- |
| | | **Mean** | **Median** | **% ≤ 3.0°** |
| | Gen. 500 | 4.48 | 3.12 | 46.9 |
| | Gen. 1000 | 4.37 | 3.20 | 44.1 |
| | Gen. 2000 | 4.77 | 3.26 | 45.1 |
| | Gen. 10000 | 4.42 | 3.21 | 45.2 |
| VGG-CC | Shi-Gehler | 6.39 | 5.68 | 14.3 |
| | Gen. 500 | 6.38 | 5.53 | 22.1 |
| | Gen. 1000 | 5.88 | 4.83 | 27.4 |
| | Gen. 2000 | 5.82 | 4.96 | 26.4 |
| | Gen. 10000 | 5.54 | 4.46 | 31.5 |
| FC4 | Shi-Gehler | 3.71 | 3.15 | 46.1 |
| | Gen. 500 | 4.43 | 3.41 | 42.6 |
| | Gen. 1000 | 4.15 | 3.47 | 41.3 |
| | Gen. 2000 | 4.09 | 3.22 | 46.2 |
| | Gen. 10000 | 3.99 | 2.92 | 52.0 |

**Claims**

1. A method for processing image data, the method comprising the following steps:

storing image data $I_{WEB}$ (101) representative of an image in a memory (2), wherein said image data $I_{WEB}$ is in RGB format;
receiving said image data $I_{WEB}$ (102) in an image signal processor (3);
transforming said image data $I_{WEB}$ into linear RGB format (103) by applying inverse gamma correction to the image data $Iw\varepsilon s;$
applying an observer color-mapping function (104) to said image data $I_{WEB}$, comprising converting chromacity coordinates $c_S$ of said image data $I_{WEB}$ (1041) from a source tristimulus color space into chromacity coordinates $c_t$ in a target tristimulus color space, wherein said conversion is done using at least one of a conversion matrix M, wherein the size of said conversion matrix M is at least 3x3, wherein the conversion of said chromacity coordinates is done using a conversion matrix M according to the formula:

$$c_t = M c_s$$

and wherein the method further comprises optimizing said conversion matrix M (1046) using a gradient descent algorithm in an iteration loop according to the formula:

$$\underset{M}{argmin} \sum_i \| c_{CIE} - M c_{sRGB} \|$$

where i refers to the number of colors used for said color-mapping function, $c_{CIE}$ represents the target chromacity coordinates in a standard color space, and $c_{sRGB}$ represents the source chromacity coordinates in the RGB color space;
wherein each non-diagonal coefficient is optimized one by one,
diagonal values are calculated right after each non-diagonal coefficient change to keep the sum of each row at 1, and

after calculating all the coefficients, the optimization step is applied again until no improvement can be noticed;

transforming said image data $I_{WEB}$ into a spectral matching color space (106) where luminance components L and chrominance components care separated;

providing values of a natural spectrum $\lambda$, covering the color gamut of a natural scene, in the same spectral matching color space (107) as the image data is transformed into, from a database (9) of natural spectra of natural scenes under typical illuminations;

applying spectral matching to said image data $I_{WEB}$ in said spectral matching color space (108), wherein said luminance components $L$ are omitted and color differences between said image and said natural spectrum $\lambda$ are measured as the Euclidean distances between their pairs of chrominance components $c$;

improving said spectral matching (109) by modifying said natural spectrum $\lambda$ into a corresponding modified natural spectrum $\lambda$ in a sequence of iterative steps (1091, 1092) in which said Euclidean distances are minimized; and

converting said image data $I_{WEB}$ to spectral image data $I_{SPEC}$ (110) of a spectral image using said corresponding modified natural spectrum $\lambda$.

**2.** A method according to claim 1, wherein the steps of the method are carried out in the sequence indicated in the claim.

**3.** A method according to claim any one of claims 1 to 2, wherein applying said observer color-mapping function to said image data $I_{WEB}$ (104) comprises

fixing the target color space (1042) to the CIE 1931 Standard Observer color space, and
defining a fixed number $N_c$ of colors (1043) with known reflection spectra and calibration charts that cover the standard RGB color gamut to be used for said color-mapping function,
wherein said fixed number $N_c$ equals or is larger than 24.

**4.** A method according to claim 3, wherein applying said observer color-mapping function to said image data $I_{WEB}$ (104) further comprises

selecting a number $N_L$ of illuminants $I$ (1044) for which their spectra are available and whose distribution approximates normal statistical distribution of typical illuminant $I$ use cases;
selecting one of said number $N_L$ of illuminants $I$ (1045) each time as selected illuminant m during said sequence of iterative steps;
wherein said selection is carried as at least one of a random selection, or a selection based on information associated with said image such as metadata or image data $I_{WEB}$; and
wherein said number $N_L$ ranges from 10 to 1000, more preferably from 50 to 500, more preferably equals 100.

**5.** A method according to any one of claims 1 to 4, further comprising

after applying said observer color-mapping function to said image data $I_{WEB}$, applying inverse Auto White Balance correction (105) to said image data $I_{WEB}$, wherein
said inverse Auto White Balance correction is preferably applied before said spectral matching.

**6.** A method according to any one of claims 1 to 5, wherein said spectral matching color space is the CIELAB color space with values defined as $(L)a_1b_1$, where L refers to the luminance components and $a_1, b_1$ refer to the chrominance components as three numerical values.

**7.** A method according to any one of claims 1 to 6, wherein applying spectral matching to said image data $I_{WEB}$ (108) comprises interpolating between color values, wherein

each pixel color is reconstructed from a set of natural spectral responses, and wherein
interpolation weights are applied in the spectral domain to reconstruct the spectrum of the color of each pixel in said image according to the formula:

$$I_i(x,y) = \sum w_l i_{db,l} \quad , i \in \{a,b\}$$

wherein $I(x,y)$ represents original image in the spectral domain, $I$ represents the illuminant, $w_l$ represents the

interpolation weights, and db represent the database of natural spectra under typical illuminations $\{R_{db}, G_{db}, B_{db}\}$.

**8.** A method according to claim 7, wherein improving said spectral matching (109) comprises

applying an iterative function (1091) that alters the interpolation spectra modulated by CIE Standard Observer curves:

$$I(\lambda) = I(\lambda) + \sum_i I(\lambda) S_i^{CIE}(\lambda) \left( \frac{c_i^T}{c_i^S} - 1 \right), \qquad i \in \{R, G, B\}$$

wherein $I(A)$ is a spectrum of the image to be optimized, where $\lambda$ represents the CIE Standard Observer curves, $S_i^{CIE}$ represents the normalized weights based on the CIE Standard Observer curves, and $c^T$ and $c^S$ represent target RBG values and source RBG values respectively; and
calculating the error (1092) between said target RBG values $c^T$ and source RBG values $c^S$, wherein said iterative function is iteratively optimized until the error is:

$$\left| c_i^T - c_i^S \right| < 0.00001$$

**9.** A method according to any one of claims 1 to 8, further comprising
after converting said image data $I_{WEB}$ to spectral image data $I_{SPEC}$, matching the brightness level (111) of said image for each pixel by applying multiplication of luminance values in the spectral domain.

**10.** A method according to any one of claims 1 to 9, further comprising

converting said spectral image data $I_{SPEC}$ to raw RGB image data $I_{RAW}$ (112) using camera characterization information regarding spatial spectral response of a camera sensor $S$,
wherein spectral image data $I_{SPEC}$ associated with one spectral image is used to generate raw RGB image data $I_{RAW}$ for multiple raw RGB images.

**11.** A method according to claim 10, wherein said camera characterization information is gained from spatial spectral measurement of a camera sensor.

**12.** A method according to any one of claims 10 or 11, wherein converting said spectral image data $I_{SPEC}$ to raw RGB image data $I_{RAW}$ (112) comprises
calculating the RGB color response (1121) of each pixel of said spectral image using said information regarding spatial spectral response of said camera sensor S and a spectrum $\lambda$ of an illuminant $I$ selected when applying said observer color-mapping function to said image data $I_{WEB}$.

**13.** A method according to claim 12, wherein converting said spectral image data $I_{SPEC}$ to raw RGB image data $I_{RAW}$ further comprises

calculating AWB correction gains (1122) by multiplying the camera response at the center of said spectral image together with the illuminant $I$ and summarizing the results for the R, G and B channels separately,
calculating color shading and vignetting parameters (1123) by multiplying the spatial camera response together with the illuminant $I$ and summarizing the results the R, G and B channels separately, then applying the Auto White Balance gains and normalizing the responses at the image center;
optionally applying vignetting correction (1124) by applying the inverse of said vignetting parameters;
applying Auto White Balance correction and color shading correction (1125) based on the calculated parameters.

**14.** A computer-based system (1) for processing image data, the system comprising

a memory device (2) configured to store image data $I_{WEB}$ of an image in RGB format;
an image signal processor (3) configured to receive the image data $I_{WEB}$ as an input for an inverse image signal processing pipeline; and
a storage device (4) configured to store instructions that, when executed by the image signal processor (3), cause the computer-based system to perform a method according to any one of the method claims 1-13.

15. A computer-readable medium having stored a computer program thereon including instructions which when executed on a processing means, carry out a method according to one of claims 1-13.

**Patentansprüche**

1. Verfahren zur Bearbeitung von Bilddaten, wobei das Verfahren die folgenden Schritte umfasst:

Speichern von Bilddaten $I_{WEB}$ (101), die ein Bild darstellen, in einem Speicher (2), wobei die Bilddaten $I_{WEB}$ im RGB-Format vorliegen;
Empfangen der Bilddaten $I_{WEB}$ (102) in einem Bildsignalprozessor (3);
Umwandeln der Bilddaten $I_{WEB}$ in ein lineares RGB-Format (103) durch Anwenden einer inversen Gammakorrektur auf die Bilddaten $I_{WEB}$;
Anwenden einer Beobachter-Farbabbildungsfunktion (104) auf die Bilddaten $I_{WEB}$, umfassend das Umwandeln von Chromazitätskoordinaten $c_s$ der Bilddaten $I_{WEB}$ (1041) von einem Tristimulus-Quellfarbraum in Chromazitätskoordinaten $c_t$ in einem Tristimulus-Zielfarbraum, wobei die Umwandlung unter Verwendung mindestens einer von einer Umwandlungsmatrix $M$ durchgeführt wird, wobei die Größe der Umwandlungsmatrix $M$ mindestens 3x3 beträgt, wobei die Umwandlung der Chromazitätskoordinaten unter Verwendung einer Umwandlungsmatrix M gemäß der folgenden Formel durchgeführt wird:

$$c_t = Mc_s$$

und wobei das Verfahren ferner das Optimieren der Umwandlungsmatrix $M$ (1046) unter Verwendung eines Gradientenabstiegsalgorithmus in einer Iterationsschleife gemäß der folgenden Formel umfasst:

$$\underset{M}{argmin} \sum_i \| c_{CIE} - Mc_{sRGB} \|$$

wobei sich i auf die Anzahl der für die Farbabbildungsfunktion verwendeten Farben bezieht, $c_{CIE}$ die Zielchromazitätskoordinaten in einem Standardfarbraum darstellt und $c_{sRGB}$ die Quellchromazitätskoordinaten im RGB-Farbraum darstellt;
wobei jeder nichtdiagonale Koeffizient einzeln optimiert wird,
Diagonalwerte direkt nach jeder Änderung der nichtdiagonalen Koeffizienten berechnet werden, um die Summe jeder Zeile auf 1 zu halten, und
nach dem Berechnen aller Koeffizienten der Optimierungsschritt so lange wiederholt wird, bis keine Verbesserung mehr festzustellen ist;
Umwandeln der Bilddaten $I_{WEB}$ in einen spektralen Anpassungsfarbraum (106), in dem die Luminanzkomponenten $L$ und die Chrominanzkomponenten c getrennt sind;
Bereitstellen von Werten eines natürlichen Spektrums $\lambda$, das die Farbskala einer natürlichen Szene abdeckt, im gleichen spektralen Anpassungsfarbraum (107), in den die Bilddaten umgewandelt werden, aus einer Datenbank (9) natürlicher Spektren natürlicher Szenen unter typischen Beleuchtungsbedingungen;
Anwenden von spektraler Anpassung auf die Bilddaten $I_{WEB}$ in dem spektralen Anpassungsfarbraum (108), wobei die Luminanzkomponenten $L$ weggelassen werden und Farbunterschiede zwischen dem Bild und dem natürlichen Spektrum $\lambda$ als euklidische Abstände zwischen ihren Paaren von Chrominanzkomponenten c gemessen werden;
Verbessern der spektralen Anpassung (109) durch Modifizieren des natürlichen Spektrums $\lambda$ in ein entsprechendes modifiziertes natürliches Spektrum $\lambda$ in einer Folge von iterativen Schritten (1091, 1092), in denen die euklidischen Abstände minimiert werden; und
Umwandeln der Bilddaten $I_{WEB}$ in Spektralbilddaten $I_{SPEC}$ (110) eines Spektralbildes unter Verwendung des entsprechenden modifizierten natürlichen Spektrums $\lambda$.

2. Verfahren gemäß Anspruch 1, wobei die Schritte des Verfahrens in der im Anspruch angegebenen Reihenfolge durchgeführt werden.

3. Verfahren gemäß Anspruch gemäß einem der Ansprüche 1 bis 2, wobei das Anwenden der Beobachter-Farbabbildungsfunktion auf die Bilddaten $I_{WEB}$ (104) Folgendes umfasst:

Festlegen des Zielfarbraums (1042) auf den CIE 1931 Standard-Beobachterfarbraum, und
Definieren einer festen Anzahl $N_c$ von Farben (1043) mit bekannten Reflexionsspektren und Kalibrierungskarten, die den Standard-RGB-Farbraum abdecken, der für die Farbabbildungsfunktion verwendet werden soll, wobei die feste Zahl $N_c$ gleich oder größer als 24 ist.

4. Verfahren gemäß Anspruch 3, wobei das Anwenden der Beobachter-Farbabbildungsfunktion auf die Bilddaten $I_{WEB}$ (104) ferner Folgendes umfasst:

Auswählen einer Anzahl $N_L$ von Lichtarten $l$ (1044), deren Spektren verfügbar sind und deren Verteilung sich der statistischen Normalverteilung typischer Anwendungsfälle der Lichtart $l$ annähert;
Auswählen einer der Anzahl $N_L$ von Lichtarten $l$ (1045) jedes Mal als ausgewählte Lichtart m während der Folge von Iterationsschritten;
wobei die Auswahl als mindestens eine einer zufälligen Auswahl oder einer Auswahl basierend auf dem Bild zugeordneten Informationen wie Metadaten oder Bilddaten $I_{WEB}$ durchgeführt wird; und
wobei die Zahl $N_L$ im Bereich von 10 bis 1000, vorzugsweise von 50 bis 500 liegt, besonders bevorzugt gleich 100 ist.

5. Verfahren gemäß einem der Ansprüche 1 bis 4, ferner umfassend:

nach Anwenden der Beobachter-Farbabbildungsfunktion auf die Bilddaten $I_{WEB}$, Anwenden einer inversen automatischen Weißabgleichskorrektur (105) auf die Bilddaten $I_{WEB}$, wobei
die inverse automatische Weißabgleichskorrektur vorzugsweise vor der spektralen Anpassung angewendet wird.

6. Verfahren gemäß einem der Ansprüche 1 bis 5, wobei der spektrale Anpassungsfarbraum der CIELAB-Farbraum mit Werten ist, die als $(L)a_1b_1$ definiert sind, wobei sich $L$ auf die Luminanzkomponenten und $a_1,b_1$ auf die Chrominanzkomponenten als drei numerische Werte beziehen.

7. Verfahren gemäß einem der Ansprüche 1 bis 6, wobei das Anwenden der spektralen Anpassung auf die Bilddaten $I_{WEB}$ (108) das Interpolieren zwischen Farbwerten umfasst, wobei

jede Pixelfarbe aus einem Satz natürlicher spektraler Antworten rekonstruiert wird, und wobei Interpolationsgewichtungen im Spektralbereich angewandt werden, um das Spektrum der Farbe jedes Pixels in dem Bild gemäß der folgenden Formel zu rekonstruieren:

$$I_i(x,y) = \sum w_i\, i_{db,l}, \, i \in \{a, b\}$$

wobei $I(x,y)$ für das Originalbild im Spektralbereich steht, $l$ für die Lichtart steht, $w_i$ für die Interpolationsgewichtungen steht und $db$ für die Datenbank der natürlichen Spektren bei typischen Beleuchtungen $\{R_{db}, G_{db}, B_{db}\}$ steht.

8. Verfahren gemäß Anspruch 7, wobei das Verbessern der spektralen Anpassung (109) ferner Folgendes umfasst:

Anwenden einer iterativen Funktion (1091), die die durch die CIE-Standardbeobachterkurven modulierten Interpolationsspektren verändert:

$$I(\lambda) = I(\lambda) + \sum_i I(\lambda) S_i^{CIE}(\lambda) \left( \frac{c_i^T}{c_i^S} - 1 \right), \, i \in \{R, G, B\}$$

wobei $I(\lambda)$ ein Spektrum des zu optimierenden Bildes ist, wobei $\lambda$ die CIE-Standardbeobachterkurven darstellt, $S_i^{CIE}$ die normalisierten Gewichtungen basierend auf den CIE-Standardbeobachterkurven darstellt und $c^T$ und $c^S$ Ziel-RBG-Werte bzw. Quell-RBG-Werte darstellen; und
Berechnen des Fehlers (1092) zwischen den Ziel-RBG-Werten $c^T$ und den Quell-RBG-Werten $c^S$, wobei die iterative Funktion iterativ optimiert wird, bis der Fehler folgenden Wert aufweist:

$$\left| c_i^T - c_i^S \right| < 0{,}00001$$

**9.** Verfahren gemäß einem der Ansprüche 1 bis 8, ferner umfassend:
nach dem Umwandeln der Bilddaten $I_{WEB}$ in Spektralbilddaten $I_{SPEC}$ Anpassen des Helligkeitsgrades (111) des Bildes für jedes Pixel durch Multiplikation der Luminanzwerte im Spektralbereich.

**10.** Verfahren gemäß einem der Ansprüche 1 bis 9, ferner umfassend:

Umwandeln der Spektralbilddaten $I_{SPEC}$ in rohe RGB-Bilddaten $I_{RAW}$ (112) unter Verwendung von Kameracharakterisierungsinformationen bezüglich der räumlichen Spektralempfindlichkeit eines Kamerasensors $S$, wobei die einem Spektralbild zugeordneten Spektralbilddaten $I_{SPEC}$ dazu verwendet werden, rohe RGB-Bilddaten $I_{RAW}$ für mehrere rohe RGB-Bilder zu erzeugen.

**11.** Verfahren gemäß Anspruch 10, wobei die Kameracharakterisierungsinformationen aus der räumlichen Spektralmessung eines Kamerasensors gewonnen werden.

**12.** Verfahren gemäß einem der Ansprüche 10 oder 11, wobei das Umwandeln der Spektralbilddaten $I_{SPEC}$ in rohe RGB-Bilddaten $I_{RAW}$ (112) das Berechnen der RGB-Farbempfindlichkeit (1121) jedes Pixels des Spektralbildes unter Verwendung der Informationen bezüglich der räumlichen Spektralempfindlichkeit des Kamerasensors S und eines Spektrums $\lambda$ einer Lichtart $I$ umfasst, die bei der Anwendung der Beobachter-Farbabbildungsfunktion auf die Bilddaten $I_{WEB}$ ausgewählt wurde.

**13.** Verfahren gemäß Anspruch 12, wobei das Umwandeln der Spektralbilddaten $I_{SPEC}$ in rohe RGB-Bilddaten $I_{RAW}$ ferner Folgendes umfasst:

Berechnen der AWB-Korrekturverstärkungen (1122) durch Multiplizieren der Kameraempfindlichkeit in der Mitte des Spektralbildes mit der Lichtart $I$ und Zusammenfassen der Ergebnisse getrennt für die Kanäle R, G und B, Berechnen von Farbschattierungs- und Vignettierungsparametern (1123) durch Multiplizieren der räumlichen Kameraempfindlichkeit mit der Lichtart $I$ und Zusammenfassen der Ergebnisse getrennt die Kanäle R, G und B, gefolgt von Anwenden der Verstärkungen des automatischen Weißabgleichs und Normalisieren der Empfindlichkeiten in der Bildmitte;
optional Anwenden der Vignettierungskorrektur (1124) durch Anwenden der Invertierung der Vignettierungsparameter;
Anwenden der automatischen Weißabgleichskorrektur und der Farbschattierungskorrektur (1125) basierend auf den berechneten Parametern.

**14.** Computerbasiertes System (1) zur Bearbeitung von Bilddaten, wobei das System Folgendes umfasst:

eine Speichervorrichtung (2), die zum Speichern von Bilddaten $I_{WEB}$ eines Bildes im RGB-Format konfiguriert ist;
einen Bildsignalprozessor (3), der dazu konfiguriert ist, die Bilddaten $I_{WEB}$ als Eingabe für eine Prozesskette zur inversen Bildsignalverarbeitung zu empfangen; und
eine Speichervorrichtung (4), die dazu konfiguriert ist, Anweisungen zu speichern, die beim Ausführen durch den Bildsignalprozessor (3) das computerbasierte System veranlassen, ein Verfahren gemäß einem der Verfahrensansprüche 1-13 durchzuführen.

**15.** Computerlesbares Medium, auf dem ein Computerprogramm gespeichert ist, das Anweisungen enthält, die beim Ausführen auf einer Verarbeitungseinrichtung ein Verfahren gemäß einem der Ansprüche 1-13 durchführen.

**Revendications**

**1.** Procédé de traitement de données d'image, le procédé comprenant les étapes suivantes :

le stockage de données d'image $I_{WEB}$ (101) représentatives d'une image dans une mémoire (2), dans lequel lesdites données d'image $I_{WEB}$ sont au format RGB ;
la réception desdites données d'image $I_{WEB}$ (102) dans un processeur de signaux d'image (3) ;
la transformation desdites données d'image $I_{WEB}$ en format RGB linéaire (103) en appliquant une correction gamma inverse aux données d'image $I_{WEB}$;

l'application d'une fonction de mappage de couleurs d'observateur (104) auxdites données d'image $I_{WEB}$, comprenant une conversion de coordonnées trichromatiques $c_s$ desdites données d'image $I_{WEB}$ (1041) d'un espace colorimétrique tristimulus source en coordonnées trichromatiques $c_t$ dans un espace colorimétrique tristimulus cible, dans lequel ladite conversion est réalisée à l'aide d'au moins l'une d'une matrice de conversion $M$, dans lequel la taille de ladite matrice de conversion $M$ est au moins 3x3, dans lequel la conversion desdites coordonnées trichromatiques est réalisée à l'aide d'une matrice de conversion $M$ selon la formule :

$$c_t = Mc_s$$

et le procédé comprenant en outre l'optimisation de ladite matrice de conversion $M$ (1046) à l'aide d'un algorithme à descente de gradient dans une boucle d'itération selon la formule :

$$\underset{M}{argmin} \sum_i \| c_{CIE} - Mc_{sRGB}$$

où $i$ se désigne le nombre de couleurs utilisées pour ladite fonction de mappage de couleurs, $C_{CIE}$ représente les coordonnées trichromatiques cibles dans un espace colorimétrique standard, et $C_{sRGB}$ représente les coordonnées trichromatiques sources dans l'espace colorimétrique RGB ;

dans lequel chaque coefficient non diagonal est optimisé un par un,

des valeurs diagonales sont calculées juste après chaque changement de coefficient non diagonal pour maintenir la somme de chaque ligne à 1 , et

après le calcul de tous les coefficients, l'étape d'optimisation est appliquée à nouveau jusqu'à ce qu'aucune amélioration ne puisse être observée ;

la transformation desdites données d'image $I_{WEB}$ en un espace colorimétrique d'égalisation spectrale (106) où les composantes de luminance $L$ et les composantes de chrominance $c$ sont séparées ;

la fourniture de valeurs d'un spectre naturel $\lambda$, couvrant la gamme de couleurs d'une scène naturelle, dans le même espace colorimétrique d'égalisation spectrale (107) que celui en lequel les données d'image sont transformées, à partir d'une base de données (9) de spectres naturels de scènes naturelles sous des illuminations typiques ;

l'application d'une égalisation spectrale auxdites données d'image $I_{WEB}$ dans ledit espace colorimétrique d'égalisation spectrale (108), dans lequel lesdites composantes de luminance $L$ sont omises et des différences de couleur entre ladite image et ledit spectre naturel $\lambda$ sont mesurées en tant que les distances euclidiennes entre leurs paires de composantes de chrominance c ;

l'amélioration de ladite égalisation spectrale (109) en modifiant ledit spectre naturel $\lambda$ en un spectre naturel modifié correspondant $\lambda$ dans une séquence d'étapes itératives (1091, 1092) dans laquelle lesdites distances euclidiennes sont minimisées ; et

la conversion desdites données d'image $I_{WEB}$ en données d'image spectrale $I_{SPEC}$ (110) d'une image spectrale à l'aide dudit spectre naturel modifié correspondant $\lambda$.

2. Procédé selon la revendication 1, dans lequel les étapes du procédé sont réalisées dans la séquence indiquée dans la revendication.

3. Procédé selon la revendication l'une quelconque des revendications 1 à 2, dans lequel l'application de ladite fonction de mappage de couleurs d'observateur auxdites données d'image $I_{WEB}$ (104) comprend

l'établissement de l'espace colorimétrique cible (1042) selon l'espace colorimétrique d'observateur standard CIE 1931, et

la définition d'un nombre fixe $N_c$ de couleurs (1043) avec des spectres de réflexion connus et des cartes d'étalonnage qui couvrent la gamme de couleurs RGB standard à utiliser pour ladite fonction de mappage de couleurs,

dans lequel ledit nombre fixe $N_c$ est égal ou supérieur à 24.

4. Procédé selon la revendication 3, dans lequel l'application de ladite fonction de mappage de couleurs d'observateur auxdites données d'image $I_{WEB}$ (104) comprend en outre

la sélection d'un nombre $N_L$ d'illuminants $I$ (1044) dont les spectres sont disponibles et dont la distribution se rapproche d'une distribution statistique normale de cas d'utilisation d'illuminants $I$ typiques ;

la sélection d'un dudit nombre $N_L$ d'illuminants $I$ (1045) à chaque fois comme illuminant $m$ sélectionné durant ladite séquence d'étapes itératives ;

dans lequel ladite sélection est réalisée en tant qu'une sélection aléatoire et/ou une sélection basée sur des informations associées à ladite image telles que des métadonnées ou des données d'image $I_{WEB}$; et

dans lequel ledit nombre $N_L$ est compris dans la plage de 10 à 1000, plus préférablement de 50 à 500, plus préférablement est égal à 100.

5. Procédé selon l'une quelconque des revendications 1 à 4, comprenant en outre

après l'application de ladite fonction de mappage de couleurs d'observateur auxdites données d'image $I_{WEB}$, l'application d'une correction d'équilibre automatique des blancs inverse (105) auxdites données d'image $I_{WEB}$, dans lequel

ladite correction d'équilibre automatique des blancs inverse est de préférence appliquée avant ladite égalisation spectrale.

6. Procédé selon l'une quelconque des revendications 1 à 5, dans lequel ledit espace colorimétrique d'égalisation spectrale est l'espace colorimétrique CIELAB avec des valeurs définies comme $(L)a_1b_1$, où $L$ désigne les composantes de luminance et $a_1,b_1$ désignent les composantes de chrominance en tant que trois valeurs numériques.

7. Procédé selon l'une quelconque des revendications 1 à 6, dans lequel l'application d'une égalisation spectrale auxdites données d'image $I_{WEB}$ (108) comprend l'interpolation entre des valeurs de couleur, dans lequel

chaque couleur de pixel est reconstruite à partir d'un ensemble de réponses spectrales naturelles, et dans lequel des poids d'interpolation sont appliqués dans le domaine spectral pour reconstruire le spectre de la couleur de chaque pixel dans ladite image selon la formule :

$$I_i(x,y) = \sum w_l i_{db,l} \ , i \in \{a, b\}$$

$I(x,y)$ représentant une image d'origine dans le domaine spectral, $I$ représentant l'illuminant, $w_i$ représentant les poids d'interpolation, et $db$ représentant la base de données de spectres naturels sous des illuminations typiques $\{R_{db}, G_{db}, B_{db}\}$.

8. Procédé selon la revendication 7, dans lequel l'amélioration de ladite égalisation spectrale (109) comprend

l'application d'une fonction itérative (1091) qui modifie les spectres d'interpolation modulés par des courbes d'observateur standard CIE :

$$I(\lambda) = I(\lambda) + \sum_i I(\lambda)S_i^{CIE}(\lambda)\left(\frac{c_i^T}{c_i^S} - 1\right), \qquad i \in \{R, G, B\}$$

$I(\lambda)$ étant un spectre de l'image à optimiser, où $\lambda$ représente les courbes d'observateur standard CIE, $S_i^{CIE}$ représente les poids normalisés selon les courbes d'observateur standard CIE, et $c^T$ et $c^S$ représentent respectivement des valeurs RBG cibles et des valeurs RBG sources ; et

le calcul de l'erreur (1092) entre lesdites valeurs RBG cibles $c^T$ et valeurs RBG sources $c^S$, dans lequel ladite fonction itérative est optimisée itérativement jusqu'à ce que l'erreur soit :

$$\left|c_i^T - c_i^S\right| < 0.0001$$

9. Procédé selon l'une quelconque des revendications 1 à 8, comprenant en outre

après la conversion desdites données d'image $I_{WEB}$ en données d'image spectrale $I_{SPEC}$, l'égalisation du niveau de luminosité (111) de ladite image pour chaque pixel en appliquant une multiplication de valeurs de luminance dans le domaine spectral.

**10.** Procédé selon l'une quelconque des revendications 1 à 9, comprenant en outre

la conversion desdites données d'image spectrale $I_{SPEC}$ en données d'image RGB brutes $I_{RAW}$ (112) à l'aide d'informations de caractérisation de caméra relatives à une réponse spectrale spatiale d'un capteur de caméra S, dans lequel des données d'image spectrale $I_{SPEC}$ associées à une image spectrale sont utilisées pour générer des données d'image RGB brutes $I_{RAW}$ pour de multiples images RGB brutes.

**11.** Procédé selon la revendication 10, dans lequel lesdites informations de caractérisation de caméra sont obtenues à partir d'une mesure spectrale spatiale d'un capteur de caméra.

**12.** Procédé selon l'une quelconque des revendications 10 ou 11, dans lequel la conversion desdites données d'image spectrale $I_{SPEC}$ en données d'image RGB brutes $I_{RAW}$ (112) comprend
le calcul de la réponse chromatique RGB (1121) de chaque pixel de ladite image spectrale à l'aide desdites informations relatives à une réponse spectrale spatiale dudit capteur de caméra S et d'un spectre $\lambda$ d'un illuminant $I$ sélectionné lors de l'application de ladite fonction de mappage de couleurs d'observateur auxdites données d'image $I_{WEB}$.

**13.** Procédé selon la revendication 12, dans lequel la conversion desdites données d'image spectrale $I_{SPEC}$ en données d'image RGB brutes $I_{RAW}$ comprend en outre

le calcul de gains de correction AWB (1122) en multipliant la réponse de caméra au centre de ladite image spectrale avec l'illuminant $I$ et en résumant séparément les résultats pour les canaux R, G et B,
le calcul de paramètres d'ombrage et de vignettage (1123) en multipliant la réponse de caméra spatiale avec l'illuminant $I$ et en résumant séparément les résultats les canaux R, G et B, puis en appliquant les gains d'équilibrage automatique des blancs et en normalisant les réponses au centre de l'image ;
l'application éventuelle d'une correction de vignettage (1124) en appliquant l'inverse desdits paramètres de vignettage ;
l'application d'une correction d'équilibrage automatique des blancs et d'une correction d'ombrage (1125) en fonction des paramètres calculés.

**14.** Système basé sur ordinateur (1) pour traiter des données d'image, le système comprenant

un dispositif de mémoire (2) configuré pour stocker des données d'image $I_{WEB}$ d'une image au format RGB ;
un processeur de signaux d'image (3) configuré pour recevoir les données d'image $I_{WEB}$ en tant qu'entrée pour un pipeline de traitement de signaux d'image inverse ; et
un dispositif de stockage (4) configuré pour stocker des instructions qui, à leur exécution par le processeur de signaux d'image (3), amènent le système basé sur ordinateur à réaliser un procédé selon l'une quelconque des revendications 1 à 13.

**15.** Support lisible par ordinateur sur lequel est stocké un programme d'ordinateur comportant des instructions qui, à leur exécution sur un moyen de traitement, exécutent un procédé selon l'une des revendications 1 à 13.

FIG. 1

FIG. 2

FIG. 3

FIG. 4

FIG. 5

FIG. 6

FIG. 7

FIG. 8

**EP 3 888 345 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180176420 A1